# EUROPEAN PATENT APPLICATION

(11) **EP 4 390 071 A1**
(43) Date of publication of application: **26.06.2024**
(21) Application number: 22215888.3
(22) Date of filing: 22.12.2022
(51) Int. Cl.: F01N 3/20, F01N 3/28, F01N 5/00, F23G 7/06, F23G 7/07

(54) **FLUID PURIFICATION DEVICE AND METHOD FOR OPERATING A FLUID PURIFICATION DEVICE**

(71) Applicant: MEGTEC Systems AB, 41666 Göteborg (SE)
(72) Inventor: KÄLLSTRAND, Åke, 41656 Göteborg (SE); POULSEN, Martin, 41666 Göteborg (SE); CARLSSON, Reino, 41666 Göteborg (SE)
(74) Representative: 2SPL Patentanwälte PartG mbB

(57) **Abstract**

A fluid reactor device, in particular a fluid purification device, is provided. The fluid reactor device includes a heat-transfer bed including heat storage material. The fluid reactor device additionally includes a heater configured to heat fluid being supplied to the heat-transfer bed to a predetermined temperature before the fluid reaches the heat storage material.

## Description

### Field

The present disclosure relates to reaction processing of fluids. In particular, examples of the present disclosure relate to a (regenerative) fluid reactor device, in particular to a (regenerative) fluid purification device, and a method for operating a (regenerative) fluid reactor device.

### Background

Conventional thermal oxidation systems using a heat-transfer bed filled with ceramic material for exhaust gas purification suffer from high temperate condensable ingredients and acidic ingredients in incoming exhaust gas streams. These ingredients cause, e.g., pollution of paths, blocking of surfaces and corrosive wear. For preventing corrosive wear, corrosion resistant materials need to be selected for any component of the thermal oxidation system which might come into contact with the incoming gas stream. Further countermeasures such as a regular thermal bakeout, usage of a sootblower (or similar devices), washing out, manual cleaning or ultrasonic cleaning are required to counteract the pollution of paths and blocking of surfaces in conventional thermal oxidation systems. Each of these countermeasures causes downtimes of the thermal oxidation system (i.e., times in which purification of exhaust gas streams by the thermal oxidation system is not possible).

Hence, there may be a demand for improved reaction processing, in particular purification, of fluids such as exhaust gases.

### Summary

The demand may be satisfied by the subject-matter of the appended claims.

According to a first aspect, the present disclosure provides a (regenerative) fluid reactor device, in particular a (regenerative) fluid purification device. The fluid reactor device comprises a heat-transfer bed. The heat-transfer bed comprises heat storage material. The fluid reactor device additionally comprises a heater configured to heat fluid being supplied to the heat-transfer bed to a predetermined temperature before the fluid reaches the heat storage material or before the fluid enters the respective plenum.

According to a second aspect, the present disclosure provides a method for operating the above fluid reactor device. The method comprises heating fluid being supplied to the heat-transfer bed to a predetermined temperature before the fluid reaches the heat storage material or before the fluid enters the respective plenum.

By (pre-)heating the fluid to the predetermined temperature before the fluid reaches the heat storage material or before the fluid enters the respective plenum, various effects such as pollution of fluid flow paths within the fluid reactor device, blocking of reaction surfaces within the fluid reactor device and corrosive wear of components of the fluid reactor device may be avoided. As corrosive wear may be avoided by heating the fluid to the predetermined temperature, components of the fluid reactor device which might come into contact with the fluid need not be corrosion resistant. As these components need not be corrosion resistant, less expensive materials may be used compared to conventional systems. Furthermore, as pollution of fluid flow paths and blocking of reaction surfaces may be avoided by heating the fluid to the predetermined temperature, no time-consuming countermeasures are required. Accordingly, downtimes of the fluid reactor device may be reduced compared to conventional systems.

For example, the predetermined temperature may be (well) above the highest dew point (temperature) of the fluid's components or at least (well) above the highest dew point of the fluid's components being critical for corrosive wear or the like. Heating the fluid being supplied to the heat-transfer bed to a temperature above the highest dew point of the fluid's components may allow to ensure that the fluid's components do not condense out of the gaseous phase. In other words, heating the fluid being supplied to the heat-transfer bed to a temperature above the highest dew point of the fluid's components may allow to ensure that the fluid substantially only contains gaseous components. Accordingly, pollution of fluid flow paths and blocking of reaction surfaces within the fluid reactor device as well as corrosive wear of components of the fluid reactor device may be avoided.

According to some examples of the present disclosure, the heater is configured to heat the fluid being supplied to the heat-transfer bed using/with heat from the heat-transfer bed and/or the heat storage material. When the fluid reacts while flowing through the heat storage material, excess heat is generated and stored by the heat storage material. Using the excess heat stored by the heat storage material may allow to at least reduce the amount of heat or energy from external sources required for heating the fluid being supplied to the heat-transfer bed. In some examples, no heat or energy from external sources may be required for heating the fluid being supplied to the heat-transfer bed. In other words, the heater may be configured to heat the fluid being supplied to the heat-transfer bed using exclusively (only) heat from the heat storage material. Using heat from the heat storage material for heating the fluid being supplied to the heat-transfer bed may allow to increase an energy efficiency of the fluid reactor device and, hence, allow to reduce an overall energy consumption of the fluid reactor device. Alternatively or additionally, the heater may comprise or be a regenerative heater using heat recovered from reacted fluid, which is drained from the heat-transfer bed. For example, the heater may be configured to heat the fluid being supplied to the heat-transfer bed using/with heat recovered from reacted fluid previously drained from the heat-transfer bed. In alternative or additional examples, the heater may be configured to heat the fluid being supplied to the heat-transfer bed using/with heat recovered from reacted fluid being concurrently (at the same time, in parallel) drained from the heat-transfer bed. The reacted fluid is still hot when it is drained form the heat-transfer bed. Recovering and using the heat of the reacted fluid for subsequently or concurrently heating the fluid may allow to further increase the efficiency of the fluid reactor device. To heat the fluid being supplied to the heat-transfer bed with heat energy from reacted fluid, the heater may, e.g., comprise heat-storage material such as a heat-storage block (e.g. a ceramic heat-storage block or honeycomb block) to recover the heat from the reacted fluid and optionally release the heat to the fluid. In other examples, the heater may be configured to transfer the heat recovered by the heat-storage material to the fluid being supplied to the heat-transfer bed.

In some examples of the present disclosure, the heater comprises at least one of a heat exchanger, a heat pipe, a heat conductor (such as a thermal oil circuit) and a heat pump configured to controllably transfer heat from the heat storage material to the fluid being supplied to the heat-transfer bed. The at least one of the heat exchanger, the heat pipe, the heat conductor and the heat pump may in particular be configured to transfer heat from an inner zone or area of the heat-transfer bed or from an area next to a reaction zone within the heat-transfer bed to the fluid being supplied to the heat-transfer bed. Alternatively or additionally, the at least one of the heat exchanger, the heat pipe, the heat conductor and the heat pump is configured to controllably transfer heat recovered from the reacted fluid to the fluid being supplied to the heat-transfer bed. Heat exchangers, heat pipes as well as heat conductors allow to transfer heat from the heat storage material and/or the heat recovered from the reacted fluid to the fluid being supplied to the heat-transfer bed with high efficiency and in a controllable manner. Accordingly, heat exchangers, heat pipes as well as heat conductors allow to controllably heat the fluid being supplied to the heat-transfer bed with heat from the heat-transfer bed or recovered heat from the reacted fluid. For example, the heat exchanger may be one of a gas-gas heat exchanger and a gas-fluid-gas heat exchanger. The heat from the heat-transfer bed or the recovered heat from the reacted fluid may also be used as input to a heat pump such that the heat pump can transfer ("pump") the given heat to the fluid being supplied to the heat-transfer bed. The transfer of the heat only requires little work and, hence, little external energy input. For example, the input external energy may be electricity from renewable sources.

According to some examples of the present disclosure, the heater comprises an electrical heater configured to controllably heat the fluid being supplied to the heat-transfer bed. Using an electrical heater for heating the fluid being supplied to the heat-transfer bed may allow to heat the fluid with electricity from renewable resources, with high efficiency and in a controllable manner. For example, the electrical heater may be used in combination with heat from the heat storage material for heating the fluid being supplied to the heat-transfer bed.

In some examples of the present disclosure, the fluid reactor device further comprises control circuitry configured to control the amount of heat transferred by the heater to the fluid. By controlling the amount of heat transferred by the heater to the fluid, the temperature of the fluid can be controlled dynamically to the predetermined temperature. Furthermore, the control circuitry may allow to control the amount of heat transferred by the heater to the fluid and, hence, the temperature of the fluid based on various parameters such as a composition of the fluid, a temperature of the fluid before heating, a temperature of the fluid after heating and/or a volume flow rate of the fluid.

For example, the fluid reactor device may further comprise a temperature sensor configured to measure the temperature of the fluid being supplied to the heat-transfer bed after passing the heater. In other words, the temperature sensor is configured to measure the temperature of the fluid after heating. The control circuitry may accordingly be configured to control the amount of heat transferred by the heater to the fluid based on measurement data of the temperature sensor. Controlling the amount of heat transferred by the heater to the fluid based on the measured temperature of the fluid after passing the heater may allow to adjust the transferred amount of heat such that the temperature of the fluid after passing the heater is (substantially) the predefined temperature. Alternatively or additionally, the fluid reactor device may further comprise a respective senor configured to measure a composition of the fluid, a temperature of the fluid before heating (i.e., before passing the heater) and a volume flow rate of the fluid. The control circuitry may accordingly be configured to control the amount of heat transferred by the heater to the fluid based on measurement data of the respective sensor. Controlling the amount of heat transferred by the heater to the fluid based on the measured quantity may allow to more precisely adjust the transferred amount of heat such that the temperature of the fluid after passing the heater is (substantially) the predefined temperature.

In some examples of the present disclosure, the fluid reactor device further comprises a first plenum fluidly coupled to a first opening of the heat-transfer bed, and a second plenum fluidly coupled to a second opening of the heat-transfer bed. The first plenum and the second plenum are configured to alternatingly supply fluid to the heat-transfer bed such that the fluid heats up and reacts while flowing through the heat storage material. During a time period in which one of the first plenum and the second plenum is configured to supply the fluid to the heat-transfer bed, the other one of the first plenum and the second plenum is configured to drain the reacted fluid from the heat-transfer bed. The periodic reversion of the flow direction of the fluid through the heat storage material may allow to maintain a high heat exchange efficiency of the heat storage material (e.g., higher than 95 %). Accordingly, the fluid reactor device may recover substantially all the heat needed for sustaining a needed reaction temperature in the heat-transfer bed (e.g., an oxidation temperature or a reduction temperature). Accordingly, the fluid reactor device may be understood as a regenerative fluid reactor device.

According to some examples of the present disclosure, the heater comprises a first contact structure for contacting the fluid and a second contact structure for contacting the fluid. The fluid reactor device further comprises control circuitry configured to control the heater to heat the fluid being supplied to the heat-transfer bed via the first contact structure during a time period in which the first plenum is configured to supply the fluid to the heat-transfer bed. The control circuitry is additionally configured to control the heater to heat the fluid being supplied to the heat-transfer bed via the second contact structure during a time period in which the second plenum is configured to supply the fluid to the heat-transfer bed. By means of the control circuitry and the first and second contact structures, the fluid being supplied to the heat-transfer bed may be selectively heated in a controllable manner during time periods in which a respective one of the first plenum and the second plenum is configured to supply the fluid to the heat-transfer bed.

In some examples of the present disclosure, the first contact structure is arranged in a first part of the first plenum which the fluid passes before reaching a second part of the first plenum during the time period in which the first plenum is configured to supply the fluid to the heat-transfer bed. The second part of the first plenum is facing the first opening. In other words, during the time period in which the first plenum is configured to supply the fluid to the heat-transfer bed, the fluid first passes through the first part of the first plenum and then passes through the second part of the first plenum. By arranging the first contact structure in the first part of the first plenum, the fluid being supplied to the heat-transfer bed may be (pre-)heated before it reaches the heat storage material during the time period in which the first plenum is configured to supply the fluid to the heat-transfer bed. Furthermore, the first contact structure is sufficiently close to the heat-transfer bed for efficiently transferring heat from the heat storage material to the first contact structure in order to enable the first contact structure to heat the fluid with the heat from the heat storage material.

According to some examples of the present disclosure, the second contact structure is analogously arranged in a first part of the second plenum which the fluid passes before reaching a second part of the second plenum during the time period in which the second plenum is configured to supply the fluid to the heat-transfer bed. The second part of the second plenum is facing the second opening. In other words, during the time period in which the second plenum is configured to supply the fluid to the heat-transfer bed, the fluid first passes through the first part of the second plenum and then passes through the second part of the second plenum. By arranging the second contact structure in the first part of the second plenum, the fluid being supplied to the heat-transfer bed may be (pre-)heated before it reaches the heat storage material during the time period in which the second plenum is configured to supply the fluid to the heat-transfer bed. Furthermore, the second contact structure is sufficiently close to the heat-transfer bed for efficiently transferring heat from the heat storage material to the second contact structure in order to enable the second contact structure to heat the fluid with the heat from the heat storage material.

In alternative examples of the present disclosure, the first contact structure is arranged at a margin of the first opening such that the fluid being supplied to the heat-transfer bed passes the first contact structure before reaching the heat storage material during the time period in which the first plenum is configured to supply the fluid to the heat-transfer bed. In other words, the first contact structure is arranged between the margin of the first opening and the heat storage material. Accordingly, when the fluid travels along the first plenum towards the heat-transfer bed, it first passes the first contact structure to heat up and only then reaches the heat storage material. By arranging the first contact structure at the margin of the first opening, the fluid being supplied to the heat-transfer bed may be (pre-)heated before it reaches the heat storage material during the time period in which the first plenum is configured to supply the fluid to the heat-transfer bed. Furthermore, as the first contact structure is arranged in immediate vicinity of the heat storage material, heat may be efficiently transferred from the heat storage material to the first contact structure in order to enable the first contact structure to heat the fluid with the heat from the heat storage material.

According to some examples of the present disclosure, the second contact structure is analogously arranged at a margin of the second opening such that the fluid being supplied to the heat-transfer bed passes the second contact structure before reaching the heat storage material during the time period in which the second plenum is configured to supply the fluid to the heat-transfer bed. Accordingly, when the fluid travels along the second plenum towards the heat-transfer bed, it first passes the second contact structure to heat up and only then reaches the heat storage material. By arranging the second contact structure at the margin of the second opening, the fluid being supplied to the heat-transfer bed may be (pre-)heated before it reaches the heat storage material during the time period in which the second plenum is configured to supply the fluid to the heat-transfer bed. Furthermore, as the second contact structure is arranged in immediate vicinity of the heat storage material, heat may be efficiently transferred from the heat storage material to the second contact structure in order to enable the second contact structure to heat the fluid with the heat from the heat storage material.

As mentioned above, in some examples of the present disclosure, the control circuitry is further configured to control the heater to transfer heat from the heat storage material to the first contact structure during the time period in which the first plenum is configured to supply the fluid to the heat-transfer bed. Analogously, the control circuitry is configured to control the heater to transfer heat from the heat storage material to the second contact structure during the time period in which the second plenum is configured to supply the fluid to the heat-transfer bed. Using the heat from the heat storage material for heating the fluid by means of the respective one of the first contact structure and the second contact structure may allow to at least reduce the amount of heat or energy from external sources required for heating the fluid being supplied to the heat-transfer bed. In some examples, no heat or energy from external sources may be required for heating the fluid being supplied to the heat-transfer bed. Using heat from the heat storage material for heating the fluid being supplied to the heat-transfer bed may allow to increase an energy efficiency of the fluid reactor device and, hence, allow to reduce an overall energy consumption of the fluid reactor device. The control circuitry may be further configured to control the heater to not transfer heat from the heat storage material to the second contact structure during the time period in which the first plenum is configured to supply the fluid to the heat-transfer bed, and vice versa. Accordingly, heat may only be transferred to the respective contact structure in the respective plenum currently supplying the fluid to the heat-transfer bed.

According to some examples of the present disclosure, the fluid reactor device further comprises an inlet configured to receive the fluid and a fluid distribution system coupled between the inlet and each of the first plenum and the second plenum. The fluid distribution system is configured to couple the inlet either to the first plenum or the second plenum. The fluid reactor device additionally comprises control circuitry configured to control the heater to heat the fluid being supplied to the heat-transfer bed via one or more contact structure of the heater. The one or more contact structure are arranged between the inlet and the fluid distribution system, and/or are integrated into the fluid distribution system. By arranging the one or more contact structure between the inlet and the fluid distribution system, and/or integrating them into the fluid distribution system, the fluid being supplied to the heat-transfer bed may be (pre-)heated before it enters the respective plenum.

In some examples of the present disclosure, the fluid reactor device further comprises an outlet configured to release the reacted fluid. In these examples, the fluid distribution system is configured to couple the one of the first plenum and the second plenum, which is not coupled to the inlet, to the outlet. That is, the fluid distribution system not only manages the distribution of the fluid to the first plenum and the second plenum, but also manages the drainage of the reacted fluid from the fluid reactor device.

According to some examples of the present disclosure, the fluid reactor device further comprises an electrical heater configured to heat the heat storage material to another predefined temperature suitable for thermal reaction of the fluid. The electrical heater may allow to initially heat the heat storage material to the other predefined temperature. At least part of the electrical heater may be arranged in the heat-transfer bed such that the heat storage material surrounds at least part of the electrical heater. In other words, at least part of the electrical heater may be embedded in the heat storage material.

In some examples of the present disclosure, one or more hollow body are arranged in the heat storage material. The inner volume (i.e., the inside) of the one or more hollow body is accessible from the outside of the heat-transfer bed. For example, one or more (e.g., closable or sealable) service opening may be formed in a wall of the heat-transfer bed surrounding the heat storage material and be connected (coupled) to the one or more hollow body such that the inner volume of the one or more hollow body is accessible via the one or more service opening. At least part of the electrical heater is removably arranged in the one or more hollow body. Arranging at least part of the electrical heater removably in the one or more hollow body may allow to easily access and/or remove the electrical heater from the fluid reactor device for inspection, maintenance, etc. In particular, arranging at least part of the electrical heater in the one or more hollow body may allow to access and/or remove the electrical heater without removing heat storage material from the heat-transfer bed. This not only may simplify inspection, maintenance, etc. of the electrical heater, but also reduce downtimes of the fluid reactor device since heat storage material need not be removed from the heat-transfer bed. Furthermore, arranging at least part of the electrical heater in the one or more hollow body may allow to facilitate the installation of the electrical heater.

According to some examples of the present disclosure, catalyst material for lowering a reaction temperature of the fluid is arranged within the heat-transfer bed. Due to the catalyst material, the needed temperature for the reaction of the fluid may be lowered such that the fluid reactor device may operate at lower temperatures.

In some examples of the present disclosure, the heat-transfer bed comprises a thermally insulating wall surrounding the heat storage material and extending between the first plenum and the second plenum. In these examples, the first opening and the second opening are formed in the thermally insulating wall. The thermally insulating wall may allow to minimize heat losses over the heat-transfer bed.

According to some examples of the present disclosure, the housing of the first plenum is at least partly formed of and/or is at least partly covered by a heat-insulating material. The heat-insulating material may allow to minimize heat loses over the housing of the first plenum. Analogously or alternatively, the housing of the second plenum may at least partly be formed of and/or at least partly be covered by a heat-insulating material to minimize heat loses over the housing of the second plenum.

### Brief description of the Figures

Some examples of apparatuses and/or methods will be described in the following by way of example only, and with reference to the accompanying figures, in which
Fig. 1a illustrates a first examples of a fluid reactor device;
Fig. 1b illustrates a sectional view of a second example of a fluid reactor device;
Fig. 2 illustrates a sectional view of a third example of a fluid reactor device;
Fig. 3 illustrates a perspective view of a fourth example of a fluid reactor device; and
Fig. 4 illustrates a flowchart of an example of a method for operating a fluid reactor device as described herein.

### Detailed Description

Some examples are now described in more detail with reference to the enclosed figures. However, other possible examples are not limited to the features of these embodiments described in detail. Other examples may include modifications of the features as well as equivalents and alternatives to the features. Furthermore, the terminology used herein to describe certain examples should not be restrictive of further possible examples.

Throughout the description of the figures same or similar reference numerals refer to same or similar elements and/or features, which may be identical or implemented in a modified form while providing the same or a similar function. The thickness of lines, layers and/or areas in the figures may also be exaggerated for clarification.

When two elements A and B are combined using an "or", this is to be understood as disclosing all possible combinations, i.e., only A, only B as well as A and B, unless expressly defined otherwise in the individual case. As an alternative wording for the same combinations, "at least one of A and B" or "A and/or B" may be used. This applies equivalently to combinations of more than two elements.

If a singular form, such as "a", "an" and "the" is used and the use of only a single element is not defined as mandatory either explicitly or implicitly, further examples may also use several elements to implement the same function. If a function is described below as implemented using multiple elements, further examples may implement the same function using a single element or a single processing entity. It is further understood that the terms "include", "including", "comprise" and/or "comprising", when used, describe the presence of the specified features, integers, steps, operations, processes, elements, components and/or a group thereof, but do not exclude the presence or addition of one or more other features, integers, steps, operations, processes, elements, components and/or a group thereof.

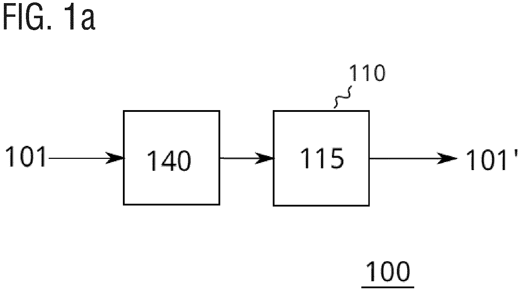

**Fig. 1a** schematically illustrates a sectional view of a fluid reactor device 100 for causing a fluid 101 to react. The fluid reactor device 100 causes at least part of the fluid 101 to react such that a reacted fluid 101' (i.e., the fluid after undergoing the reaction) is obtained.

The fluid 101 may be or comprise one or more gaseous components (substances, ingredients), one or more vapor components (substances, ingredients), one or more liquid components (substances, ingredients), and/or mixtures thereof. According to examples of the present disclosure, the fluid 101 may comprise exclusively gaseous components or substances. For example, the fluid 101 may be an exhaust gas or an exhaust air, wherein an exhaust air contains a higher proportion of oxygen compared to an exhaust gas.

The type of reaction is not limited. In particular, the fluid reactor device 100 may be a fluid purification device for purifying the fluid 101. In case the fluid reactor device 100 is a fluid purification device, the fluid purification device removes one or more ingredient or reactant from the fluid 101 by reaction processing for purifying the fluid. The one or more ingredient or reactant may be understood as one or more impurity and/or one or more pollutant. An impurity may be understood in this context as a substance (ingredient, reactant) in the fluid 101 that is not included in a desired (target) composition of the fluid 101. A pollutant may be understood in this context as a substance (ingredient, reactant) that harms systems, animals, humans and/or the environment when occurring in a specific quantity or concentration (e.g., defined as mass of the pollutant per unit volume of the fluid 101 or as number of pollutant particles per unit volume of the fluid 101). One or more impurity or pollutant contained in the fluid 101 may be combustible. In other words, the fluid 101 may comprises one or more combustible ingredient or reactant. For example, organic and/or inorganic impurities or pollutants may be removed from the fluid 101 by the fluid purification device. The organic and/or inorganic impurities or pollutants may, e.g., be Volatile Organic Compounds (VOCs), solvents, nitrogen oxides (NOₓ), methane (CH₄), sulfur oxides (SOₓ), hydrogen fluoride (HF), ammonia (NH₃), hydrogen chloride (HCl), dioxins, furans or pollutants of the basic structure CₓH_{y}O_{z} (C denotes carbon; H denotes hydrogen; O denotes oxygen; x, y, and z are natural numbers).

The fluid reactor device 100 comprises a (e.g., single, i.e., exactly/only one) heat-transfer bed 110. The heat-transfer bed 110 comprises (e.g., is filled with) heat storage material (heat transfer material) 115. The heat storage material 115 is material capable of storing and releasing heat. The heat storage material exhibits a certain (predefined) specific heat capacity and preferably a certain (predefined) heat transfer and/or transmission coefficient. For example, the heat storage material 115 may comprise or be ceramic material such as alumina porcelain, mullite, fireclay (chamotte), cordierite, zircon or a mixture thereof. However, the present disclosure is not limited thereto. Other types of ceramic material may be used as well. In some examples, the heat storage material 115 may alternatively or additionally comprise or be concrete, stone, rock, metallic material or a mixture thereof. The heat storage material 115 may be packed structured or randomly in the heat-transfer bed 110 to form regular or irregular patterns (e.g., ceramic honeycombs, ceramic saddles or the like may be used).

Additionally, the fluid reactor device 100 comprises a heater 140 configured to heat the fluid 101 being supplied to the heat-transfer bed 110 to a predetermined temperature before the fluid 101 reaches the heat storage material 115. The predetermined temperature may, e.g., be above the highest dew point of the fluid 101's components such that the fluid 101's components do not condense out of the gaseous phase. In other examples, the second predetermined temperature may, e.g., be at least (well) above the highest dew point of the fluid's components being critical for corrosive wear or the like.

By (pre-)heating the fluid 101 to the predetermined temperature before the fluid 101 reaches the heat storage material 115, various effects such as pollution of fluid flow paths within the fluid reactor device 100, blocking of reaction surfaces within the fluid reactor device 100 and corrosive wear of components of the fluid reactor device 100 may be avoided. As corrosive wear may be avoided by heating the fluid 101 to the predetermined temperature, components of the fluid reactor device 100 which might come into contact with the fluid 101 need not be corrosion resistant. As these components need not be corrosion resistant, less expensive materials may be used compared to conventional systems. Furthermore, as pollution of fluid flow paths and blocking of reaction surfaces may be avoided by heating the fluid 101 to the predetermined temperature, no time-consuming countermeasures are required. Accordingly, downtimes of the fluid reactor device 100 may be reduced compared to conventional systems.

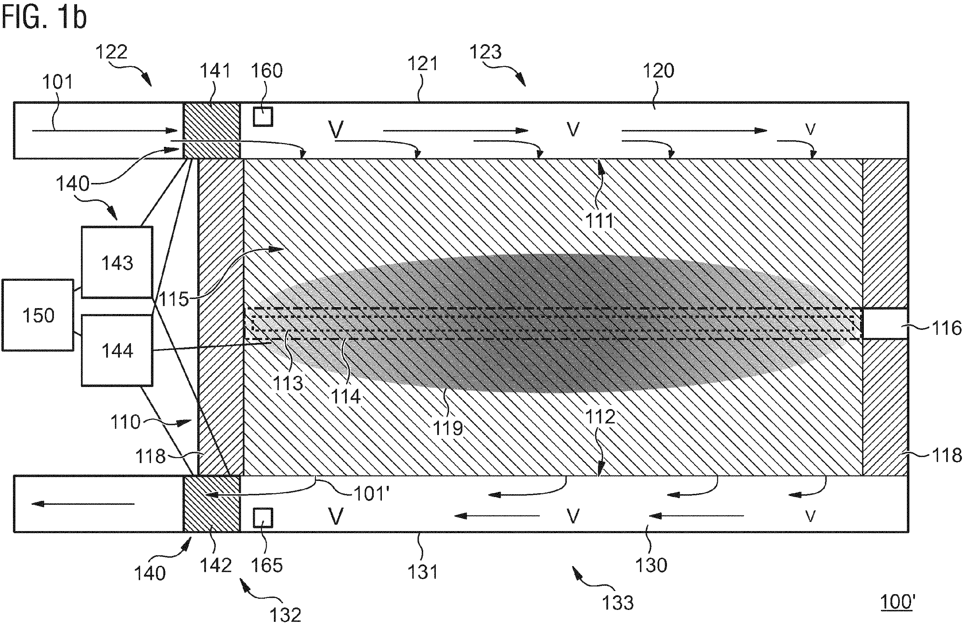

The flow direction of the fluid 101 through the heat storage material 115 may be constant (stable) over time as indicated in Fig. 1a. In other examples, the flow direction of the fluid 101 through the heat storage material 115 may at least once be reversed over time (e.g., periodically or aperiodically). This is described below in detail with reference to Fig. 1b.

In the following, a plurality of more detailed fluid reactor devices will be described with reference to the figures to highlight further aspects of the present disclosure.

**Fig. 1b** schematically illustrates a sectional view of another fluid reactor device 100'. The fluid reactor device 100' comprises a (e.g., single, i.e., exactly/only one) heat-transfer bed 110 as described above. The heat-transfer bed 110 comprises (e.g., is filled with) heat storage material (heat transfer material) 115.

The heat-transfer bed 110 comprises a thermally insulating wall 118 surrounding the heat storage material 115. A first opening 111 and a second opening 112 are formed in the thermally insulating wall 118. A first plenum 120 is attached to the first opening 111 of the heat-transfer bed 110, and a second plenum 130 is attached to the second opening 112 of the heat-transfer bed 110. The first opening 111 and the second opening 112 are arranged on opposite sides of the heat-transfer bed 110 such that the thermally insulating wall 118 extends between the first plenum 120 and the second plenum 130. In other examples, at least one of the first plenum 120 and the second plenum 130 need not be directly attached to the first and second openings 111 and 112. For example, one or more intermediate elements or a (temporary) bypass may be coupled between at least one of the first plenum 120 and the second plenum 130 and the first and second openings 111 and 112. In general, the first plenum 120 is fluidly coupled to the first opening 111, and the second plenum 130 is fluidly coupled to the second opening 112.

The first plenum 120 and the second plenum 130 are configured to alternatingly supply the fluid 101 to the heat-transfer bed 110 such that the fluid 101 heats up and reacts while flowing through the heat storage material 115. It is to be noted that all components of the fluid 101 or only part of the components of the fluid 101 may react. In other words, at least one component of the fluid 101 reacts while flowing through the heat storage material 115. That is, the fluid 101 may comprise one or more reactive component which reacts while flowing through the heat storage material 115 and one or more non-reactive component which does not react while flowing through the heat storage material 115. For example, the fluid 101 may be heated up and be subject to an oxidation process or a reduction process while flowing through the heat storage material 115. The fluid 101 may, e.g., comprise an exhaust air being a mixture of air (or a near air-like gas mixture) and at least one combustible (such as a VOC or the like). In this example, the VOC reacts with the air's oxygen while flowing through the heat storage material 115, whereas other components of the fluid 101 do not take part in the reaction. The heat storage material 115 is configured to store heat released by the fluid 101 during and/or after the reaction. An inner zone or area 119 of the heat-transfer bed 110 in which the reaction takes mainly place is exemplarily illustrated in Fig. 1b. The inner zone or area 119 may be understood as a reaction zone or area within the heat-transfer bed 110. The inner zone or area 119 is located at or near a center plane of the heat-transfer bed 110 and/or may oscillate around center plane of the heat-transfer bed 110.

During a time period in which one of the first plenum 120 and the second plenum 130 is configured to supply the fluid 101 to the heat-transfer bed 110, the other one of the first plenum 120 and the second plenum 130 is configured to drain the reacted fluid 101' (i.e., the fluid after undergoing the reaction) from the heat-transfer bed 110. Accordingly, a flow direction of the fluid 101 through the heat storage material 115 is periodically reversed (e.g., every 90 to 120 seconds).

Fig. 1b illustrates the fluid reactor device 100' during a time period in which the first plenum 120 is configured to supply the fluid 101 to the heat-transfer bed 110 and the second plenum 130 is configured to drain the reacted fluid 101' from the heat-transfer bed 110. Accordingly, the fluid 101 flows from the top to the bottom of the heat-transfer bed 110 through the heat storage material 115. Heat energy previously stored in the top part of the heat storage material 115 is used to heat up the fluid 101 and causes the fluid 101 to react. The heat storage material 115 at the bottom part recovers the excess heat energy from the reacted fluid 101'. For example, as the fluid 101 passes from the top part to the bottom part of the heat storage material 115, VOCs in the fluid 101 may get hot enough to undergo thermal oxidation to water vapor and carbon dioxide.

During a time period in which the second plenum 130 is configured to supply the fluid 101 to the heat-transfer bed 110, the fluid flow is reversed. That is, while the second plenum 130 is configured to supply the fluid 101 to the heat-transfer bed 110, the first plenum 120 is configured to drain the reacted fluid 101' from the heat-transfer bed 110. Accordingly, the fluid 101 flows from the bottom to the top of the heat-transfer bed 110 through the heat storage material 115. Heat energy previously stored in the bottom part of the heat storage material 115 is used to heat up the fluid 101 and causes the fluid 101 to react. The heat storage material 115 at the top part recovers the heat energy from the reacted fluid 101'.

The periodic reversion of the flow direction of the fluid 101 through the heat storage material 115 may allow to maintain a high heat exchange efficiency of the heat storage material 115 (e.g., higher than 95 %). Accordingly, the fluid reactor device 100' may recover substantially all the heat needed for sustaining a needed reaction temperature in the heat-transfer bed 110 (e.g., an oxidation temperature or a reduction temperature). Accordingly, the fluid reactor device 100' may be understood as a regenerative fluid reactor device. For example, irrespective of the flow direction of the fluid 101 through the heat storage material 115, a temperature of the reacted fluid 101' may be less than 100 °C higher than that of the fluid 101 supplied to the heat-transfer bed 110 (e.g., the temperature may be only 20 °C to 50 °C higher). Further, the periodic reversion of the flow direction of the fluid 101 may allow to maintain a predetermined temperature profile of the heat-transfer bed 110 along the extension of the heat-transfer bed 110 between the first plenum 110 and the second plenum 120 (i.e., along the vertical extension of the heat-transfer bed in the example of Fig. 1b). In particular, the periodic reversion of the flow direction of the fluid 101 may allow to keep the hottest zone near a center plane of the heat-transfer bed 110 along the extension of the heat-transfer bed 110 between the first plenum 110 and the second plenum 120. In other words, the hottest zone may substantially be the inner zone or area 119 illustrated in Fig. 1b.

During operation of the fluid reactor device 100', the heat storage material 115 may exhibit a first predefined temperature suitable for thermal reaction of the fluid 101. For example, the first predefined temperature may be more than approx. 600 °C, 800 °C or 1000 °C. The fluid reactor device 100' may according to some examples of the present disclosure comprise an electrical heater 113 configured to heat the heat storage material 115 to the first predefined temperature. It is to be noted that the electrical heater 113 is not mandatory. The electrical heater 113 may, e.g., be a grid of electrical coils arranged in the heat storage material 115. The electrical heater 113 may, e.g., be used to initially heat the heat storage material 115 to the first predefined temperature (e.g., after start-up of the fluid reactor device 100'). In the example of Fig. 1b, one electrical heater 113 is arranged in the center region of the heat-transfer bed 110 and extends perpendicular to the extension of the heat-transfer bed 110 between the first plenum 110 and the second plenum 120. However, it is to be noted that the present disclosure is not limited thereto. The arrangement as well as the extension of the electrical heater 113 may be different from what is shown in Fig. 1b.

Furthermore, it is to be noted that the electrical heater 113 need not be arranged directly in the heat storage material 115. Optionally, one or more hollow body such as the hollow body 114 may be arranged in the heat storage material 115. The inner volume (i.e., the inside) of the one or more hollow body is accessible from the outside of the heat-transfer bed 110. For example, one or more (e.g., closable or sealable) service opening such as the service opening 116 may be formed in thermally insulating wall 118 and be connected (coupled) to the one or more hollow body such that the inner volume of the one or more hollow body is accessible via the one or more service opening. At least part of the electrical heater 113 (e.g., its electrical coils) is removably arranged in the one or more hollow body. Arranging at least part of the electrical heater removably in the one or more hollow body may allow to easily access and/or remove the electrical heater 113 from the fluid reactor device 100' for inspection, maintenance, etc. In particular, arranging at least part of the electrical heater in the one or more hollow body may allow to access and/or remove the electrical heater 113 without removing heat storage material 115 from the heat-transfer bed 110. This not only may simplify inspection, maintenance, etc. of the electrical heater 113, but also reduce downtimes of the fluid reactor device 100' since heat storage material 115 need not be removed from the heat-transfer bed 110. Furthermore, installation of the electrical heater 113 may be facilitated.

The one or more hollow body exhibits a certain (predefined) specific heat capacity and preferably a certain (predefined) heat transfer and/or transmission coefficient, which should be high and/or may be similar to the ones of the heat storage material 115, to enable efficient heat transport from the electrical heater 113 to the heat storage material 115 surrounding the one or more hollow body. For example, the one or more hollow body may comprise or be ceramic material such as alumina porcelain, mullite, fireclay (chamotte), cordierite, zircon or a mixture thereof. However, the present disclosure is not limited thereto. Other types of material may be used as well (e.g., concrete, stone, rock, metallic material or a mixture thereof).

According to some examples of the present disclosure, catalyst material for lowering a reaction temperature of the fluid 101 may be arranged within the heat-transfer bed 110. Accordingly, the needed temperature for the reaction of the fluid 101 (e.g., oxidation or rection) may be lower such that the fluid reactor device 100' may operate at lower temperatures. For example, one or more layer of catalyst material may be provided separate from the heat storage material 115. One or more layer of catalyst material may, e.g., be attached to one or both ends of the heat-transfer bed 110 along the (possible) flow directions of the fluid (e.g., near the first opening 111 and the second opening 112). Alternatively or additionally, the heat storage material 115 in the heat-transfer bed 110 (e.g., cordierite) may at least in part be coated with and/or comprise (contain) catalyst material or catalytically active components. Further alternatively or additionally, catalyst material may be admixed to the heat storage material 115 in the heat-transfer bed 110. Still further alternatively or additionally, a first part of the heat storage material 115 in the heat-transfer bed 110 may be coated with and/or comprise (contain) catalyst material or catalytically active components, whereas a second part of the heat storage material 115 in the heat-transfer bed 110 does not comprise catalyst material and catalytically active components. The first part and the second part of the heat storage material 115 may be admixed or be provided as different layers in the heat-transfer bed 110. For example, one or more oxidation catalysts and/or one or more reduction catalysts may be used. However, the present disclosure is not limited thereto. Also other types of catalysts may be used.

In case the fluid reactor device 100' is a fluid purification device, the fluid purification device may, e.g., purify the fluid 101 by Regenerative Thermal Oxidation (RTO). In other examples of the present disclosure, the fluid purification device may purify the fluid 101 by Regenerative Catalytic Oxidation (RCO). For example, the fluid purification device may be configured to purify the fluid 101 by flameless RTO or flameless RCO. However, the present disclosure is not limited thereto. Also other reactions of the fluid 101 such as a reduction of fluid may be used.

Each of the first plenum 120 and the second plenum 130 comprises a respective housing 121, 131 attached to the heat-transfer bed 110 such that the respective volume enclosed by the respective housing 121, 131 forms a respective plenum space for alternatingly transporting the fluid 101 towards and transporting the reacted fluid 101' away from the heat-transfer bed 110. The first plenum 120 and the second plenum 130 may alternatingly be coupled to a respective one of a source providing/emitting the fluid 101 (e.g., a device such as a machine or a production facility emitting the fluid 101) and a receiver of the reacted fluid 101' (e.g., a chimney for releasing the reacted fluid 101' to the environment or another device or system for further treating the reacted fluid 101') by a coupling system (not illustrated in Fig. 1b). The coupling system may be part of the fluid reactor device 100' or be external to the fluid reactor device 100'. The housing 121 of the first plenum 120 may according to examples of the present disclosure at least partly be formed of and/or be at least partly covered by a heat-insulating material to minimize heat loses over the housing 121 of the first plenum 120. Analogously, the housing 131 of the second plenum 130 may according to examples of the present disclosure at least partly be formed of and/or be at least partly covered by a heat-insulating material to minimize heat loses over the housing 131 of the second plenum 130.

Additionally, the fluid reactor device 100' comprises a heater 140 configured to heat the fluid 101 being supplied to the heat-transfer bed 110 to a second predetermined temperature before the fluid 101 reaches the heat storage material 115. The second predetermined temperature may, e.g., be above the highest dew point of the fluid 101's components such that the fluid 101's components do not condense out of the gaseous phase. In other examples, the second predetermined temperature may, e.g., be at least (well) above the highest dew point of the fluid's components being critical for corrosive wear or the like. The second predetermined temperature may be higher or lower than the first predetermined temperature to which the heat storage material 115 is heated by the electrical heater 113.

By (pre-)heating the fluid 101 to the second predetermined temperature before the fluid 101 reaches the heat storage material 115, various effects such as pollution of fluid flow paths within the fluid reactor device 100', blocking of reaction surfaces within the fluid reactor device 100' and corrosive wear of components of the fluid reactor device 100' may be avoided. As corrosive wear may be avoided by heating the fluid 101 to the second predetermined temperature, components of the fluid reactor device 100' which might come into contact with the fluid 101 need not be corrosion resistant. As these components need not be corrosion resistant, less expensive materials may be used compared to conventional systems. Furthermore, as pollution of fluid flow paths and blocking of reaction surfaces may be avoided by heating the fluid 101 to the second predetermined temperature, no time-consuming countermeasures are required. Accordingly, downtimes of the fluid reactor device 100' may be reduced compared to conventional systems.

In the example of Fig. 1b, the heater 140 comprises a first contact structure (element, material, device, means) 141 for contacting the fluid 101 and a second contact structure (element, material, device, means) 142 for contacting the fluid 101. The first contact structure 141 is arranged in a first part 122 of the first plenum 120. The fluid 101 passes the first part 122 of the first plenum 120 before reaching a second part 123 of the first plenum 120 during the time period in which the first plenum 120 is configured to supply the fluid 101 to the heat-transfer bed 110. The second part 123 of the first plenum 120 is facing the first opening 111. Analogously, the second contact structure 142 is arranged in a first part 132 of the second plenum 130. The fluid 101 passes the first part 132 of the second plenum 130 before reaching a second part 133 of the second plenum 130 during the time period in which the second plenum 130 is configured to supply the fluid 101 to the heat-transfer bed 110. The second part 133 of the second plenum 130 is facing the second opening 112.

The first contact structure 141 is configured to controllably transfer heat to the fluid 101 while the fluid 101 passes the first contact structure 141 on its way toward the heat-transfer bed 110. Analogously, the second contact structure 142 is configured to controllably transfer heat to the fluid 101 while the fluid 101 passes the second contact structure 142 on its way toward the heat-transfer bed 110. The first and second contract structures 141 and 142 may generally exhibit any shape that allows to contact the fluid 101. For example, the first and second contact structures 141 and 142 may each, e.g., be or comprise one or more of a contact surface (planar or non-planar) and a contact grid.

The fluid reactor device 100' further comprises control circuitry 150 configured to control the heater 140. The control circuitry 150 is coupled to the heater 140. For example, the control circuitry 150 may be a single dedicated processor, a single shared processor, or a plurality of individual processors, some of which or all of which may be shared, a digital signal processor (DSP) hardware, an application specific integrated circuit (ASIC), or a field programmable gate array (FPGA). The one or more control circuitry may optionally be coupled to, e.g., read only memory (ROM) for storing software (e.g., storing a program for controlling the respective at least one actuator), random access memory (RAM) and/or non-volatile memory.

The control circuitry 150 is configured to control the heater 140 to heat the fluid 101 being supplied to the heat-transfer bed 110 via the first contact structure 141 during the time period in which the first plenum 110 is configured to supply the fluid 101 to the heat-transfer bed 110. This is illustrated in Fig. 1b. During the time period in which the first plenum 120 is configured to supply the fluid 101 to the heat-transfer bed 110, the fluid 101 first passes through the first part 122 of the first plenum 120 and then passes through the second part 123 of the first plenum 120. By arranging the first contact structure 141 in the first part 122 of the first plenum 120, the fluid 101 being supplied to the heat-transfer bed 110 may be (pre-)heated before it reaches the heat storage material 115.

Analogously, the control circuitry 150 is configured to control the heater 140 to heat the fluid 101 being supplied to the heat-transfer bed 110 via the second contact structure 142 during the time period in which the second plenum 130 is configured to supply the fluid 101 to the heat-transfer bed 110. As described above, the fluid flow is reversed to the situation illustrated in Fig. 1b during the time period in which the second plenum 130 is configured to supply the fluid 101 to the heat-transfer bed 110. Accordingly, the fluid 101 first passes through the first part 132 of the second plenum 130 and then passes through the second part 133 of the second plenum 130. By arranging the second contact structure 142 in the first part 132 of the second plenum 130, the fluid 101 being supplied to the heat-transfer bed 110 may be (pre-)heated before it reaches the heat storage material 115 during the time period in which the second plenum 130 is configured to supply the fluid 101 to the heat-transfer bed 110.

For example, the heater 140 may comprise an electrical heater 143 configured to controllably heat the fluid 101 being supplied to the heat-transfer bed 110. The electrical heater may, e.g., be a central electrical heater 143 thermally coupled to the first contact structure 141 and the second contact structure 142 as illustrated in Fig. 1b. Accordingly, the control circuitry 150 may control the electrical heater 143 to selective supply heat to one of the first contact structure 141 and the second contact structure 142 depending on which of the first plenum 120 and the second plenum 130 is currently configured to supply the fluid 101 to the heat-transfer bed 110. In alternative examples, the electrical heater 143 may comprise a first electrical sub-heater thermally coupled to the first contact structure 141 and a second electrical sub-heater coupled to the second contact structure 142. Accordingly, the control circuitry 150 may control the electrical sub-heaters to selectively supply heat to one of the first contact structure 141 and the second contact structure 142 depending on which of the first plenum 120 and the second plenum 130 is currently configured to supply the fluid 101 to the heat-transfer bed 110. For example, the electrical heater 143 may comprise of at least one of the following: an electro-resistive heater, an electro-magnetic heater (inductive heater), or an electrically driven radiation heater (e.g. an infrared, IR, emitter). Using the electrical heater 143 for heating the fluid 101 being supplied to the heat-transfer bed 110 may allow to heat the fluid 101 with electricity from renewable resources, with high efficiency and in a controllable manner.

Alternatively or additionally to comprising the electrical heater 143, the heater 140 may be configured to heat the fluid 101 being supplied to the heat-transfer bed 110 using heat from the heat-transfer bed 110 and/or the heat storage material 115. In particular, the heater 140 may be configured to heat the fluid 101 being supplied to the heat-transfer bed 110 using heat from the inner zone or area 119. For example, the heater 140 may comprise at least one of a heat exchanger, a heat pipe, a heat conductor (e.g., a thermal oil circuitry) and a heat pump configured to controllably transfer heat from the heat-transfer bed 110 and/or the heat storage material 115 (e.g., the inner zone or area 119) to the fluid 101 being supplied to the heat-transfer bed 110. In the example of Fig. 1b, the heat exchanger, heat pipe, heat conductor and/or heat pump is/are schematically illustrated and denoted by reference numeral 144. The heat exchanger, heat pipe, heat conductor and/or heat pump 144 is/are thermally coupled to the heat-transfer bed 110 and/or the heat storage material 115 and each of the first contact structure 141 and the second contact structure 142 in order to controllably transfer heat from the heat storage material 115 to the fluid 101 via the first contact structure 141 and the second contact structure 142. The heat exchanger may, e.g., be one of a gas-gas heat exchanger (such as a tube based gas-gas heat exchanger) and a gas-fluid-gas heat exchanger (such as a tube based gas-fluid-gas heat exchanger).

The control circuitry 150 may be used for controlling the heat transfer from the heat-transfer bed 110 and/or the heat storage material 115 to the fluid 101. In particular, the control circuitry 150 may be configured to control the amount of heat transferred by the heater 140 to the fluid 101. For example, the control circuitry 150 may be configured to control the at least one of the heat exchanger, the heat pipe, the heat conductor and the heat pump 144 to selectively supply heat from the heat-transfer bed 110 and/or the heat storage material 115 to one of the first contact structure 141 and the second contact structure 142 depending on which one of the first plenum 120 and the second plenum 130 is configured to supply the fluid 101 to the heat-transfer bed 110. In other words, the control circuitry 150 is configured to control the heater 140 to transfer heat from the heat-transfer bed 110 and/or the heat storage material 115 to the first contact structure 141 during the time period in which the first plenum 120 is configured to supply the fluid 101 to the heat-transfer bed 110, and to control the heater 140 to transfer heat from the heat-transfer bed 110 and/or the heat storage material 115 to the second contact structure 142 during the time period in which the second plenum 130 is configured to supply the fluid 101 to the heat-transfer bed 110.

When the fluid 101 reacts while flowing through the heat storage material 115, excess heat is generated and stored by the heat storage material 115 (i.e., in the heat-transfer bed 110). In particular, heat may be generated and stored in the inner zone or area 119. Using the excess heat stored by the heat-transfer bed 110 and/or the heat storage material 115 may allow to at least reduce the amount of heat or energy from external sources required for heating the fluid 101 being supplied to the heat-transfer bed 110. In some examples, no heat or energy from external sources may be required for heating the fluid 101 being supplied to the heat-transfer bed 110. In other words, the heater 140 may be configured to heat the fluid 101 being supplied to the heat-transfer bed 110 using exclusively (only) heat from the heat-transfer bed 110 and/or the heat storage material 115. Using heat from the heat-transfer bed 110 and/or the heat storage material 115 for heating the fluid 101 being supplied to the heat-transfer bed 110 may allow to increase an energy efficiency of the fluid reactor device 100' and, hence, allow to reduce an energy consumption of the fluid reactor device 100'.

As the first and second contact structures 141 and 142 are arranged in the respective first part 122, 132 of the first plenum 120 and the second plenum 130, the first and second contact structures 141 and 142 are sufficiently close to the heat-transfer bed 110 for efficiently transferring heat from the heat storage material 115 to the respective contact structure in order to enable the respective contact structure to heat the fluid 101 with the heat from the heat storage material 115.

In some examples, the heater 140 may comprise or be a regenerative heater using heat recovered from the reacted fluid 101', which is drained from the heat-transfer bed 110, for heating the fluid 101 being supplied to the heat-transfer bed 110. In other words, the heater 140 may be a regenerative heater providing regenerative heat recovery and transfer from the reacted fluid 101' to the fluid 101 being supplied to the heat-transfer bed 110. According to examples, the heater 140 may additionally or alternatively be configured to heat the fluid 101 being supplied to the heat-transfer bed 110 using heat recovered from the reacted fluid 101' previously drained from the heat-transfer bed 110. For example, at least one of the first contact structure 141 and the second contact structure 142 may additionally or alternatively be configured to heat the fluid 101 using heat recovered from the reacted fluid 101' previously drained from the heat-transfer bed 110 via the respective plenum. The reacted fluid 101' is still hot when it is drained form the heat-transfer bed 110. Recovering and using the heat of the reacted fluid 101' for subsequently heating the fluid 101 may allow to further increase the efficiency of the fluid reactor device 100' and at the same time reduce the risk of condensations inside the first plenum 120 and the second plenum 130 due to an increased temperature level of the incoming fluid 101. During the time period in which the first plenum 120 is configured to supply the fluid 101 to the heat-transfer bed 110, the first contact structure 141 may, e.g., be configured to heat the fluid 101 being supplied to the heat-transfer bed 110 using heat recovered from the reacted fluid 101' which was drained from the heat-transfer bed 110 via the first plenum 120 during the previous (e.g., the immediately preceding) time period in which the second plenum 130 was configured to supply the fluid 101 to the heat-transfer bed 110. Analogously, during the time period in which the second plenum 130 is configured to supply the fluid 101 to the heat-transfer bed 110, the second contact structure 142 may be configured to heat the fluid 101 being supplied to the heat-transfer bed 110 using heat recovered from the reacted fluid 101' which was drained from the heat-transfer bed 110 via the second plenum 130 during the previous (e.g., the immediately preceding) time period in which the first plenum 120 was configured to supply the fluid 101 to the heat-transfer bed 110. Accordingly, the first contact structure 141 and/or the second contact structure 142 may comprise or at least partly be made of heat storage material (e.g., with similar or identical thermal properties as the heat storage material 115 described above).

Alternatively or additionally, the heater 140 may be configured to heat the fluid 101 being supplied to the heat-transfer bed 110 using heat recovered from the reacted fluid 101' being concurrently (at the same time, in parallel) drained from the heat-transfer bed 110. During the time period in which the first plenum 120 is configured to supply the fluid 101 to the heat-transfer bed 110, the first contact structure 141 may, e.g., be configured to heat the fluid 101 being supplied to the heat-transfer bed 110 using heat recovered from the reacted fluid 101' which is concurrently drained from the heat-transfer bed 110 via the second plenum 130. Analogously, during the time period in which the second plenum 130 is configured to supply the fluid 101 to the heat-transfer bed 110, the second contact structure 142 may be configured to heat the fluid 101 being supplied to the heat-transfer bed 110 using heat recovered from the reacted fluid 101' which is concurrently drained from the heat-transfer bed 110 via the first plenum 120. For example, the respective contact structure 141, 142 or any other heat-storage material (e.g., with similar or identical thermal properties as the heat storage material 115 described above) in the respective one of the first plenum 120 and the second plenum 130 may be configured to recover heat from the reacted fluid 101'. The control circuitry 150 may be configured to control the at least one of the heat exchanger, the heat pipe, the heat conductor and the heat pump 144 to selectively supply heat recovered from the reacted fluid 101' in one of the first plenum 120 and the second plenum 130 to the respective contact structure 141, 142 in the other one of the first plenum 120 and the second plenum 130 depending on which one of the first plenum 120 and the second plenum 130 is configured to supply the fluid 101 to the heat-transfer bed 110. Using heat recovered from the reacted fluid 101' for heating the fluid 101 being supplied to the heat-transfer bed 110 may allow to increase an energy efficiency of the fluid reactor device 100' and, hence, allow to reduce an energy consumption of the fluid reactor device 100'.

Regarding the placement of the schematically illustrated heat exchanger, heat pipe, heat conductor and/or heat pump 144 in Fig. 1b, it is to be noted that the placement of this element is chosen for illustrative purposes only. The heat exchanger, heat pipe, heat conductor and/or heat pump 144 may at least in part be arranged in the heat-transfer bed 110 and be thermally coupled to the first and second contact structures 141 and 142. This is illustrated in Fig. 1b by the connections of the heat exchanger, heat pipe, heat conductor and/or heat pump 144 to the heat-transfer bed 110 and the first and second contact structures 141 and 142. Accordingly, the heat exchanger, heat pipe, heat conductor and/or heat pump 144 may be configured to selectively and controllably transfer heat from the heat storage material 115 to the first and second contact structures 141 and 142 (e.g., under the control of the control circuitry 150).

The control circuitry 150 may control the amount of heat transferred by the heater 140 to the fluid 101 based on various parameters. For example, the control circuitry 150 may be configured to control the amount of heat transferred by the heater 140 to the fluid 101 based on a composition of the fluid 101, a temperature of the fluid 101 before heating (i.e., before passing the heater 140), a temperature of the fluid 101 after heating (i.e., after passing the heater 140) and/or a volume flow rate of the fluid 101. The composition of the fluid 101 is indicative of the highest dew point of the fluid 101's components and may, hence, be used to set the second predefined temperature to which the fluid 101 is heated by the heater 140. The temperature of the fluid 101 before passing the heater 140 allows to determine the temperature increase required to reach the second predefined temperature. The temperature of the fluid 101 after passing the heater 140 indicates whether the fluid 101 is heated sufficiently or too much by the heater 140. The volume flow rate of the fluid 101 influences the amount of heat required for sufficiently heating the fluid 101 to the second predefined temperature (e.g., the higher the volume flow rate of the fluid 101 is, the more heat is required for heating). The fluid reactor device 100' or the control circuitry 150 may comprise one or more interface (not illustrated in Fig. 1b) configured to receive data and/or one or more input signal indicating one or more of the above parameters. Alternatively or additionally, the fluid reactor device 100' may comprise one or more sensor for measuring one or more of the above parameters.

Fig. 1b exemplarily illustrates a temperature sensor 160 configured to measure a temperature of the fluid 101 being supplied to the heat-transfer bed after passing the heater 140. The sensor 160 is arranged in the first plenum 120 such that the fluid 101 first passes the first contact structure 141 before it reaches the temperature sensor 160 during the time period in which the first plenum 120 is configured to supply the fluid 101 to the heat-transfer bed 110. As described above, the control circuitry 150 is configured to control the amount of heat transferred by the heater 140 to the fluid 101 via the first contact structure 141 based on measurement data of the temperature sensor 160. Analogously, the fluid reactor device 100' comprises another temperature sensor 165 arranged in the second plenum 130 such that the fluid 101 first passes the second contact structure 142 before it reaches the temperature sensor 165 during the time period in which the second plenum 130 is configured to supply the fluid 101 to the heat-transfer bed 110. The control circuitry 150 is configured to control the amount of heat transferred by the heater 140 to the fluid 101 via the second contact structure 142 based on measurement data of the temperature sensor 165. Controlling the amount of heat transferred by the heater 140 to the fluid 101 based on the measured temperature of the fluid 101 after passing the heater 140 may allow to adjust the transferred amount of heat such that the temperature of the fluid 101 after passing the heater is (substantially) the second predefined temperature.

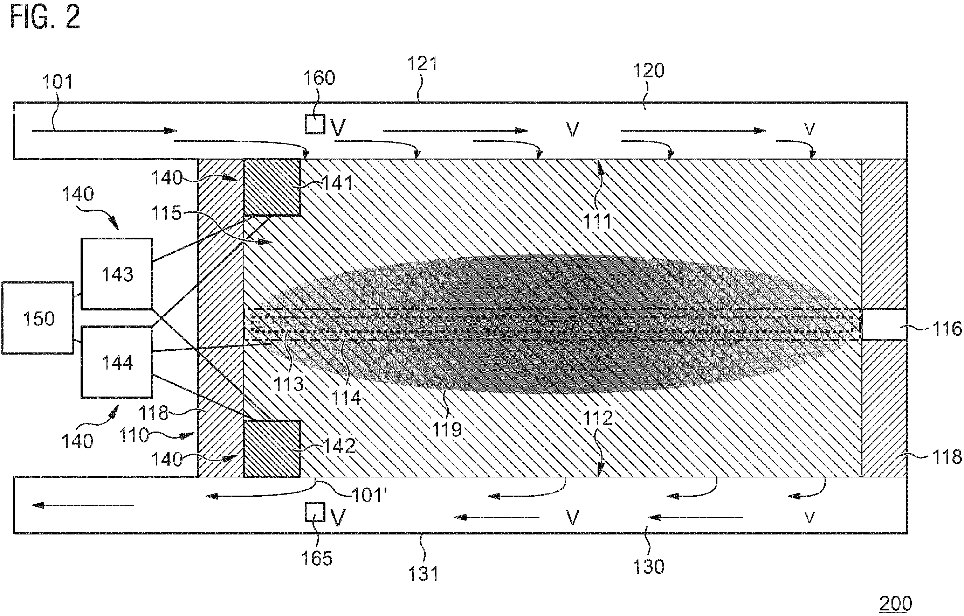

**Fig. 2** schematically illustrates a sectional view of another fluid reactor device 200 with an alternative arrangement of the first and second contact structures 141 and 142. Other than that, the fluid reactor device 200 is identical to the fluid reactor device 100' described above. In the example of Fig. 2, the first and second contact structures 141 and 142 are not arranged in the first plenum 120 and the second plenum 130.

As illustrated in Fig. 2, the first contact structure 141 is arranged at a margin (i.e., the outside limit) of the first opening 111 such that the fluid 101 being supplied to the heat-transfer bed 110 passes the first contact structure 141 before reaching the heat storage material 115 during the time period in which the first plenum 120 is configured to supply the fluid 101 to the heat-transfer bed 110. The first contact structure 141 is arranged between the margin of the first opening 111 and the heat storage material 115. Accordingly, when the fluid 101 travels along the first plenum 120 towards the heat-transfer bed 110, it first passes the first contact structure 141 to heat up and only then reaches the heat storage material 115.

Analogously, the second contact structure 142 is arranged at a margin of the second opening 112 such that the fluid 101 being supplied to the heat-transfer bed 110 passes the second contact structure 142 before reaching the heat storage material 115 during the time period in which the second plenum 130 is configured to supply the fluid 101 to the heat-transfer bed 110. As described above, the fluid flow is reversed to the situation illustrated in Fig. 1b during the time period in which the second plenum 130 is configured to supply the fluid 101 to the heat-transfer bed 110. Accordingly, when the fluid 101 travels along the second plenum 130 towards the heat-transfer bed 110, it first passes the second contact structure 142 to heat up and only then reaches the heat storage material 115.

Like the example of Fig. 1b, the fluid 101 may be (pre-)heated before it reaches the heat storage material 115 by the first and second contact structures 141 and 142. As the first and second contact structures 141 and 142 are arranged in immediate vicinity of the heat storage material 115, heat may be efficiently transferred from the heat storage material 115 to the first and second contact structures 141 and 142 and enable the first and second contact structures 141 and 142 to heat the fluid 101 with the heat from the heat storage material 115.

Regarding the schematically illustrated heat exchanger, heat pipe, heat conductor and/or heat pump 144 in Fig. 2, it is to be noted that the placement of this element is chosen for illustrative purposes only. The heat exchanger, heat pipe, heat conductor and/or heat pump 144 may at least in part be arranged in the heat-transfer bed 110 and be thermally coupled to the first and second contact structures 141 and 142. This is illustrated in Fig. 2 by the connections of the heat exchanger, heat pipe, heat conductor and/or heat pump 144 to the heat-transfer bed 110 and the first and second contact structures 141 and 142. Accordingly, the heat exchanger, heat pipe heat conductor and/or heat pump 144 may be configured to selectively and controllably transfer heat from the heat storage material 115 to the first and second contact structures 141 and 142 (e.g., under the control of the control circuitry 150).

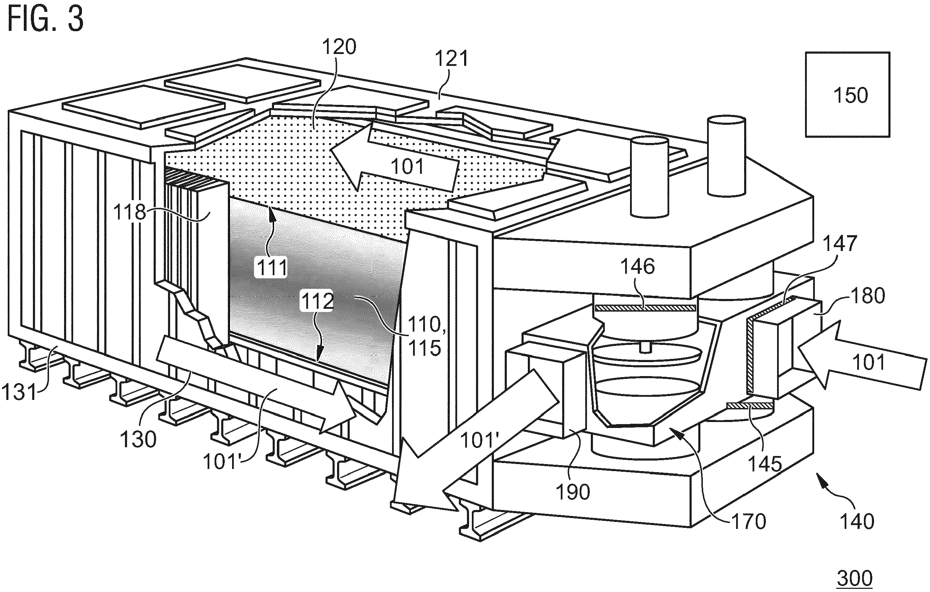

In the above examples of Fig. 1b and Fig. 2, the fluid 101 is (pre-)heated while it travels through the respective plenum toward the heat-transfer bed 110. However, it is to be noted that the present disclosure is not limited thereto. In other examples, the fluid being supplied to the heat-transfer bed may be heated by the heater before the fluid enters the respective plenum. This is exemplarily illustrated in **Fig. 3****,** which illustrates a perspective view of another fluid reactor device 300. The arrangement of the heater is different in the example of Fig. 3. Other than that, the fluid reactor device 300 is identical to the fluid reactor devices 100' and 200 described above.

Fig. 3 illustrates an inlet 180 of the fluid reactor device 300. The inlet 180 is configured to receive the fluid 101 from a source providing/emitting the fluid 101. A fluid distribution system 170 is coupled between the inlet 180 and each of the first plenum 120 and the second plenum 130. The fluid distribution system 170 is configured to alternatingly couple the inlet 180 either to the first plenum 120 or the second plenum 130. In particular, the fluid distribution system 170 is configured to couple the inlet to the first plenum 120 during the time period in which the first plenum 120 is configured to supply the fluid 101 to the heat-transfer bed 110. This is illustrated in Fig. 3. In order to reverse the fluid flow through the heat-transfer bed 110, the fluid distribution system 170 is further configured to couple the inlet to the second plenum 130 during the time period in which the second plenum 130 is configured to supply the fluid 101 to the heat-transfer bed 110.

The fluid distribution system 170 is configured to couple the one of the first plenum 120 and the second plenum 130, which is not coupled to the inlet 170, to an outlet 190 of the fluid reactor device 300 for releasing the reacted fluid 101'. As illustrated in Fig. 3, the fluid distribution system 170 is configured to couple the second plenum 130 to the outlet 190 during the time period in which the first plenum 120 is configured to supply the fluid 101 to the heat-transfer bed 110. Analogously, the fluid distribution system 170 is configured to couple the first plenum 120 to the outlet 190 during the time period in which the second plenum 130 is configured to supply the fluid 101 to the heat-transfer bed 110.

As illustrated in Fig. 3, the fluid distribution system 170 may comprise two valves for providing the above described functionality. The fluid distribution system 170 may be understood as a valve box.

In order to heat the fluid 101 being supplied to the heat-transfer bed 101 before the fluid 101 enters the respective plenum 120 or 130, the heater 140 may, e.g., be arranged between the inlet 180 and the fluid distribution system 170 such that the fluid 101 is already heated before it is guided by the fluid distribution system 170 to one of the first plenum 120 and the second plenum 130. For example, a contact structure 147 for contacting the fluid 101 may be arranged between the inlet 180 and the fluid distribution system 170.

Alternatively or additionally, the heater 140 may be integrated into the fluid distribution system 170 such that the fluid 101 is already heated while it passes through the fluid distribution system 170 towards one of the first plenum 120 and the second plenum 130. This is exemplarily illustrated in Fig. 3 by means of the contact structures 146 and 147 for contacting the fluid 101, which are integrated into the fluid distribution system 170.

As described above for the fluid reactor devices 100' and 200, the heater may comprise an electrical heater (not illustrated in Fig. 3) configured to controllably heat the fluid 101 being supplied to the heat-transfer bed 110. For example, the electrical heater may be thermally coupled to one or more of the contact structures 145 to 147 illustrated in Fig. 3.

Alternatively or additionally, the heater 140 may be configured to heat the fluid 101 being supplied to the heat-transfer bed 110 using heat from the heat storage material 115. For example, the heat from the heat storage material 115 may be transferred to one or more of the contact structures 145 to 147 illustrated in Fig. 3 (e.g., by means of a heat exchanger and/or a heat pipe, not illustrated in Fig. 3).

Analogously to what is described above, the control circuitry 150 of the fluid reactor device 300 is configured to control the amount of heat transferred by the heater 140 to the fluid 101. For example, the control circuitry 150 may be configured to control the heater 140 to transfer heat from the heat storage material 115 to the one or more of the contact structures 145 to 147.

The contact structures 145 to 147 may be shaped analogously to the contact structures 141 and 142 described above.

Although not illustrated in Fig. 1b and Fig. 2, also the fluid reactor devices 100' and 200 may optionally further comprise an inlet, an outlet and a fluid distribution system as described above.

In some examples of the present disclosure, the examples of Fig. 1b to Fig. 3 may be combined. A fluid reactor device according to the combined example may comprise contact structures as illustrated in one of Fig. 1b and Fig. 2, and additionally one or more contact structure as illustrated in Fig. 3.

The above described exemplary fluid reactor devices illustrate a variety of solutions for bringing the temperature of an incoming fluid or stream to a predetermined temperature, which may, e.g., be well above the highest dew point of the fluid's or stream's ingredients. As described above, heat may be transferred from the central reaction or conversion zone of a fluid reactor device to the incoming fluid or stream. For example, a heat exchanger or a pre-heater may be placed near the entries of the reaction chamber to heat the incoming fluid or stream. Control means may be provided to control the amount of heat transferred to the incoming fluid or stream (e.g., the amount of heat transferred from the central reaction region to the gas entry gates) and/or to switch the direction of heat transfer (e.g., to align the heat transfer to the actual flow direction of the process gas).

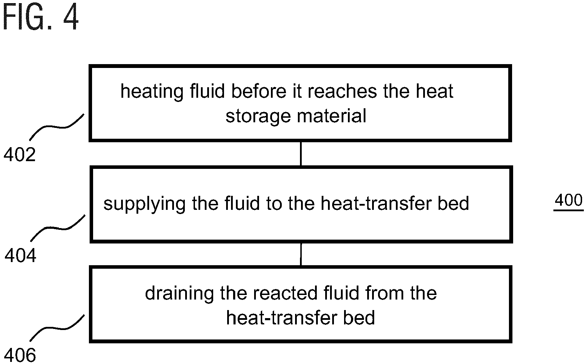

For further illustrating the proposed architecture for fluid processing, **Fig. 4** illustrates a flowchart of a method 400 for operating a fluid reactor device according to the present disclosure. The method 400 comprises heating 402 the fluid being supplied to the heat-transfer bed to a predetermined temperature before the fluid reaches the heat storage material or before the fluid enters the respective plenum.

Similar to what is described above, the method 400 may enable improved purification of the fluid compared to conventional approaches. In particular, (pre-)heating the fluid to the predetermined temperature before the fluid reaches the heat storage material or before the fluid enters the respective plenum may allow to avoid various effects such as pollution of fluid flow paths within the fluid reactor device, blocking of reaction surfaces within the fluid reactor device and corrosive wear of components of the fluid reactor device. As components of the fluid reactor device which might come into contact with the fluid need not be corrosion resistant, less expensive materials may be used compared to conventional systems. Furthermore, as pollution of fluid flow paths and blocking of reaction surfaces may be avoided by heating the fluid to the predetermined temperature, no time-consuming countermeasures are required. Accordingly, downtimes of the fluid reactor device may be reduced compared to conventional systems.

More details and aspects of the method 400 are explained in connection with the proposed technique or one or more example described above (e.g., Figs. 1 to 3). The method 400 may comprise one or more additional optional feature corresponding to one or more aspect of the proposed technique, or one or more example described above. For example, the method 400 may additionally comprise supplying 404 the fluid to the heat-transfer bed alternatingly through the first plenum and the second plenum such that the fluid heats up and reacts while flowing through the heat storage material. Additionally, the method 400 may comprise, during a time period in which one of the first plenum and the second plenum supplies the fluid to the heat-transfer bed, draining 406 the reacted fluid from the heat-transfer bed through the other one of the first plenum and the second plenum.

The aspects and features described in relation to a particular one of the previous examples may also be combined with one or more of the further examples to replace an identical or similar feature of that further example or to additionally introduce the features into the further example.

It is further understood that the disclosure of several steps, processes, operations or functions disclosed in the description or claims shall not be construed to imply that these operations are necessarily dependent on the order described, unless explicitly stated in the individual case or necessary for technical reasons. Therefore, the previous description does not limit the execution of several steps or functions to a certain order. Furthermore, in further examples, a single step, function, process or operation may include and/or be broken up into several sub-steps, -functions, -processes or -operations.

If some aspects have been described in relation to a device or system, these aspects should also be understood as a description of the corresponding method. For example, a block, device or functional aspect of the device or system may correspond to a feature, such as a method step, of the corresponding method. Accordingly, aspects described in relation to a method shall also be understood as a description of a corresponding block, a corresponding element, a property or a functional feature of a corresponding device or a corresponding system.

The following claims are hereby incorporated in the detailed description, wherein each claim may stand on its own as a separate example. It should also be noted that although in the claims a dependent claim refers to a particular combination with one or more other claims, other examples may also include a combination of the dependent claim with the subject matter of any other dependent or independent claim. Such combinations are hereby explicitly proposed, unless it is stated in the individual case that a particular combination is not intended. Furthermore, features of a claim should also be included for any other independent claim, even if that claim is not directly defined as dependent on that other independent claim.

## Claims

1. A fluid reactor device (100, 100', 200, 300), in particular a fluid purification device, comprising:
a heat-transfer bed (110) comprising heat storage material (115); and
a heater (140) configured to heat fluid (101) being supplied to the heat-transfer bed (110) to a predetermined temperature before the fluid (101) reaches the heat storage material (115).

2. The fluid reactor device (100', 200, 300) of claim 1, wherein the heater (140) is configured to heat the fluid (101) being supplied to the heat-transfer bed (110) using heat from the heat-transfer bed (110) and/or the heat storage material (115) and/or heat recovered from reacted fluid (101') previously drained from the heat-transfer bed (110) and/or heat recovered from reacted fluid (101') being concurrently drained from the heat-transfer bed (110).

3. The fluid reactor device (100', 200, 300) of claim 2, wherein the heater (140) comprises at least one of a heat exchanger, a heat pipe, a heat conductor and a heat pump (144) configured to controllably transfer heat from the heat storage material (115) and/or heat recovered from the reacted fluid (101') to the fluid (101) being supplied to the heat-transfer bed (110).

4. The fluid reactor device (100', 200, 300) of claim 3, wherein the heat exchanger is one of a gas-gas heat exchanger and a gas-fluid-gas heat exchanger.

5. The fluid reactor device (100', 200, 300) of any one of claims 1 to 4, wherein the heater (140) comprises an electrical heater (143) configured to controllably heat the fluid (101) being supplied to the heat-transfer bed (110).

6. The fluid reactor device (100', 200, 300) of any one of claims 1 to 5, further comprising control circuitry (150) configured to control the amount of heat transferred by the heater (140) to the fluid (101).

7. The fluid reactor device (100', 200, 300) of claim 6, further comprising a temperature sensor configured to measure the temperature of the fluid (101) being supplied to the heat-transfer bed (110) after passing the heater (140), wherein the control circuitry (150) is configured to control the amount of heat transferred by the heater (140) to the fluid (101) based on measurement data of the temperature sensor.

8. The fluid reactor device (100', 200, 300) of any one of claims 1 to 7, further comprising:
a first plenum (120) fluidly coupled to a first opening (111) of the heat-transfer bed (110);
a second plenum (130) fluidly coupled to a second opening (112) of the heat-transfer bed (110),
wherein the first plenum (120) and the second plenum (130) are configured to alternatingly supply the fluid (101) to the heat-transfer bed (110) such that the fluid (101) heats up and reacts while flowing through the heat storage material (115),
wherein, during a time period in which one of the first plenum (120) and the second plenum (130) is configured to supply the fluid (101) to the heat-transfer bed (110), the other one of the first plenum (120) and the second plenum (130) is configured to drain the reacted fluid (101') from the heat-transfer bed (110).

9. The fluid reactor device (100', 200, 300) of claim 8, wherein the heater (140) comprises a first contact structure (141) for contacting the fluid (101) and a second contact structure (142) for contacting the fluid (101), and wherein the fluid reactor device (100, 200, 300) further comprises control circuitry (150) configured to control the heater (140) to:
heat the fluid (101) being supplied to the heat-transfer bed (110) via the first contact structure (141) during a time period in which the first plenum (120) is configured to supply the fluid (101) to the heat-transfer bed (110); and
heat the fluid (101) being supplied to the heat-transfer bed (110) via the second contact structure (142) during a time period in which the second plenum (130) is configured to supply the fluid (101) to the heat-transfer bed (110).

10. The fluid reactor device (100') of claim 9, wherein the first contact structure (141) is arranged in a first part of the first plenum (120) which the fluid (101) passes before reaching a second part of the first plenum (120) during the time period in which the first plenum (120) is configured to supply the fluid (101) to the heat-transfer bed (110), the second part of the first plenum (120) facing the first opening (111).

11. The fluid reactor device (100') of claim 9 or claim 10, wherein the second contact structure (142) is arranged in a first part of the second plenum (130) which the fluid (101) passes before reaching a second part of the second plenum (130) during the time period in which the second plenum (130) is configured to supply the fluid (101) to the heat-transfer bed (110), the second part of the second plenum (130) facing the second opening (112).

12. The fluid reactor device (200) of claim 9, wherein the first contact structure (141) is arranged at a margin of the first opening (111) such that the fluid (101) being supplied to the heat-transfer bed (110) passes the first contact structure (141) before reaching the heat storage material (115) during the time period in which the first plenum (120) is configured to supply the fluid (101) to the heat-transfer bed (110).

13. The fluid reactor device (200) of claim 9 or claim 12, wherein the second contact structure (142) is arranged at a margin of the second opening (112) such that the fluid (101) being supplied to the heat-transfer bed (110) passes the second contact structure (142) before reaching the heat storage material (115) during the time period in which the second plenum (130) is configured to supply the fluid (101) to the heat-transfer bed (110).

14. The fluid reactor device (100', 200) of any one of claims 9 to 13, wherein the control circuitry (150) is further configured to control the heater (140) to:
transfer heat from the heat storage material (115) to the first contact structure (141) during the time period in which the first plenum (120) is configured to supply the fluid (101) to the heat-transfer bed (110); and
transfer heat from the heat storage material (115) to the second contact structure (142) during the time period in which the second plenum (130) is configured to supply the fluid (101) to the heat-transfer bed (110).

15. The fluid reactor device (300) any one of claims 8 to 14, further comprising:
an inlet (180) configured to receive the fluid (101);
a fluid distribution system (170) coupled between the inlet (180) and each of the first plenum (120) and the second plenum (130), wherein the fluid distribution system (170) is configured to couple the inlet (180) either to the first plenum (120) or the second plenum (130); and
control circuitry (150) configured to control the heater (140) to heat the fluid (101) being supplied to the heat-transfer bed (110) via one or more contact structure (145, 146, 147) of the heater (140), wherein the one or more contact structure (145, 146, 147) are arranged between the inlet (180) and the fluid distribution system (170), and/or are integrated into the fluid distribution system (170).

16. The fluid reactor device (100, 100', 200, 300) of any one of claims 1 to 15, wherein the predetermined temperature is above the highest dew point of the fluid's components.

17. A method (400) for operating a fluid reactor device according to any one of claims 1 to 16, the method comprising:
heating (402) fluid being supplied to the heat-transfer bed to a predetermined temperature before the fluid reaches the heat storage material.
